Europäisches Patentamt

European Patent Office

Office européen des brevets

(19)

(11) Numéro de publication : **0 020 239
B1**

(12) # FASCICULE DE BREVET EUROPÉEN

(45) Date de publication du fascicule du brevet :
28.12.83

(21) Numéro de dépôt : 80400704.5

(22) Date de dépôt : 21.05.80

(51) Int. Cl.³ : **F 16 K   1/226**

(54) **Vanne-papillon.**

(30) Priorité : 23.05.79 FR 7913175

(43) Date de publication de la demande :
10.12.80 Bulletin 80/25

(45) Mention de la délivrance du brevet :
28.12.83 Bulletin 83/52

(84) Etats contractants désignés :
BE DE FR GB IT LU NL

(56) Documents cités :
DE-C-   517 642
FR-A- 1 301 739
FR-A- 2 144 236
FR-A- 2 247 653

(73) Titulaire : **APPLICATIONS MECANIQUES ET ROBI-
NETTERIE INDUSTRIELLE A.M.R.I. Société anonyme
dite:**
**50, Avenue Daumesnil
F-75012 Paris (FR)**

(72) Inventeur : **Chiron, Alain
Résidence Nabat Avenue de la Gare
F-64400 Oloron Sainte Marie (FR)**

(74) Mandataire : **Jolly, Jean-Pierre et al
Cabinet BROT 83, rue d'Amsterdam
F-75008 Paris (FR)**

EP 0 020 239 B1

Vanne-papillon

La présente invention concerne un dispositif d'obturation pour vanne-papillon à siège perpendiculaire à l'axe de la vanne et à papillon décalé par rapport à son axe d'entraînement.

Elle s'applique plus particulièrement, mais non exclusivement aux vannes-papillons dans lesquelles la garniture d'étanchéité qui forme le siège de la vanne est montée dans le corps de la vanne, présente une forme circulaire, est située dans un plan perpendiculaire à l'axe de la vanne et est décalée et éventuellement excentrée par rapport à l'axe d'entraînement du papillon.

On sait que dans de telles vannes, l'obturation est en général obtenue, en partant de la position ouverte de la vanne, par une rotation du papillon d'un angle sensiblement égal à 90°, au terme de laquelle la tranche du papillon vient comprimer la garniture d'étanchéité, réalisant ainsi l'étanchéité.

De façon plus précise, la garniture d'étanchéité formant siège qui peut consister par exemple en un joint métallique flexible ou un joint élastomère, assure d'une part, une étanchéité, dite statique, avec le corps de la vanne et, d'autre part, une étanchéité dite dynamique, avec le papillon.

Toutefois, en raison de la cinématique de ce type de vannes à papillon décalé, il se pose un problème relatif à l'homogénéité de l'étanchéité à la périphérie du papillon. Ainsi, de nombreuses solutions ont été proposées pour tenter de résoudre ce problème.

A cet effet, le brevet FR-A-2 144 236 décrit une vanne-papillon comprenant un papillon monté basculant à l'intérieur d'un corps tubulaire autour d'un arbre décalé par rapport au plan d'étanchéité. Ce papillon présente à sa périphérie une garniture élastique annulaire qui vient s'appliquer, en position fermée de la vanne contre une surface, de forme correspondante, d'un siège ménagé dans le corps. La solution proposée dans ce brevet consiste à utiliser un siège et une courbe d'étanchéité à la périphérie du papillon, qui présentent une forme ovale constituée par une suite d'éléments de courbures différentes. Dans ce cas, le siège et la courbe d'étanchéité du papillon comprennent d'une part, au-dessus de l'axe de basculement et sur une zone partielle latérale, un élément formant partie d'une surface conique, dont le sommet se trouve du côté du papillon opposé à l'axe de basculement, et d'autre part, au-dessus de l'axe de basculement, sur une autre zone partielle latérale, un élément formant partie d'une surface conique du siège, en sens opposé, dont le sommet se trouve du même côté du papillon que l'axe de basculement. Ainsi grâce à une telle disposition, la traction de coincement exercée de toutes parts en présence de la garniture d'étanchéité élastique du papillon assure, malgré les irrégularités inévitables de la courbe, une étanchéité parfaite pour la vanne.

Toutefois, l'inconvénient de cette solution consiste en ce que les contraintes résultant de l'action du papillon sur le siège ont un bras de levier important par rapport à l'axe de rotation, ce qui a pour effet d'engendrer des couples importants tant à l'ouverture qu'à la fermeture de la vanne.

Selon une autre solution classique, le papillon décalé et excentré présente une portée de contact (tranche) de forme sphérique venant reposer sur un joint circulaire monté dans le corps de la vanne, la compression s'effectue par un déplacement du sphérique du papillon provoquant la pénétration de sa portée sphérique dans le joint circulaire. On notera à ce sujet qu'en général, le sphérique du papillon qui consiste en la sphère dans laquelle se trouve inscrite la tranche du papillon, est centré dans le plan passant par l'axe des arbres du papillon et qui est parallèle au plan du papillon.

Ainsi, dans de telles vannes, le déplacement relatif papillon-siège est obtenu par excentration entre l'axe des arbres et le plan de symétrie du papillon. L'angle de portée, formé par le vecteur déplacement du papillon et la tangente à la susdite sphère, est très petit, ce qui engendre un frottement intense entre le siège et le papillon. En conséquence, ce type de vannes souffre du même inconvénient qui affecte la vanne décrite dans le brevet FR-A-2 144 236.

L'invention a donc pour but de supprimer ces inconvénients. Elle propose à cet effet une vanne-papillon comprenant un obturateur dont la cinématique est sensiblement la même que celle précédemment décrite mais qui est conformé de manière à assurer une répartition des contraintes telle que la valeur absolue de ces contraintes et leur bras de levier par rapport à l'axe des arbres soient minimum, afin de réduire au maximum les frottements et le couple d'ouverture.

Dans un but de réduire le couple résistant à l'ouverture et à la fermeture d'une vanne-papillon, le FR-A-2 247 653 décrit un papillon dont la forme de sa tranche est définie par un cône oblique dont le sommet unique n'est pas situé sur l'axe de symétrie du papillon. Il en suit que, en position fermée de la vanne, les normales à la portée de contact coupent l'axe de symétrie du siège élastique entre deux points extrêmes, le passage d'un point d'intersection au suivant s'effectuant progressivement et de façon continue.

La vanne-papillon selon l'invention comprend un corps dont l'alésage central est muni d'un siège perpendiculaire à l'axe de l'alésage, un joint d'étanchéité monté sur ledit siège et un papillon monté pivotant dans ledit corps au moyen d'un axe d'entraînement en rotation décalé par rapport audit papillon, ce papillon présentant une tranche venant comprimer ledit joint en position fermée de la vanne, au niveau d'une portée de contact de forme sensiblement circulaire, la tranche du papillon étant formée par la réunion de deux surfaces à profil différent, mais d'une même famille, situées de part et d'autre du plan de symétrie du papillon qui est perpendiculaire au plan dudit papillon et est parallèle à ou passe par son axe d'entraînement en rotation, le passage de l'une des surfaces à l'autre s'effectuant progressivement, de façon continue, dans deux zones de raccordement formant un angle δ de part et d'autre dudit plan de symétrie. Une telle vanne est connue du FR-A-2 144 236 précité. Pour arriver au résultat recherché, cette vanne-papillon est plus particulièrement caractérisée en ce que, en position fermée de la vanne,

— les normales à la portée de contact de l'une des deux surfaces de la tranche du papillon avec le joint d'étanchéité convergent en un point $C_1$ de l'axe de symétrie du joint, situé d'un côté de l'axe d'entraînement en rotation du papillon,

— les normales à la portée de contact de l'autre surface de la tranche du papillon, avec le joint d'étanchéité convergent en un point différent $C_2$ de l'axe de symétrie du joint, situé de l'autre côté de l'axe d'entraînement en rotation du papillon, et

— les normales à la portée de contact dans les deux zones de raccordement, coupent l'axe de symétrie du joint entre les deux points $C_1$ et $C_2$, le passage d'un point d'intersection au suivant s'effectuant progressivement et de façon continue.

Selon d'autres caractéristiques de l'invention, les formes de la tranche du papillon satisfaisant à ces conditions peuvent consister en les formes suivantes :

— la réunion des deux formes sphériques centrées aux points $C_1$, $C_2$ et raccordées entre elles par une succession continue de portions sphériques élémentaires de manière à assurer un passage progressif de l'une des formes sphériques à l'autre ;

— la réunion de deux formes coniques centrées sur l'axe de symétrie du siège et dont les normales passant par les points de contact du siège, sont concourantes aux points $C_1$ et $C_2$ précédemment définis et raccordées entre elles par une succession continue de portions coniques élémentaires dont l'angle au sommet varie progressivement ;

— la réunion de deux surfaces toriques dont le centre du cercle générateur, les points de contact siège-papillon et les points $C_1$ et $C_2$ sont alignés, le raccordement entre les deux surfaces toriques se faisant par une succession continue de formes toriques élémentaires ;

— la réunion de deux surfaces multitoriques, cette forme étant constituée par au moins deux portions de tore dont les centres des cercles directeurs, les points de contact siège-papillon et les points distincts $C_1$ et $C_2$ sont alignés.

Des modes de réalisation de l'invention seront décrits ci-après, à titre d'exemples non limitatifs avec référence aux dessins annexés dans lesquels :

Les figures 1 et 2 sont deux coupes schématiques, passant par l'axe de rotation du papillon (figure 1) et perpendiculaire à l'axe de rotation du papillon (figure 2), d'une vanne à papillon décalé et décentré par rapport à son axe de rotation ;

Les figures 3, 4 et 5 sont des coupes schématiques permettant d'illustrer la cinématique de la vanne représentée figures 1 et 2 ;

Les figures 6, 7 et 8 sont des représentations schématiques permettant de mettre en relief les différents paramètres intervenant à l'ouverture et à la fermeture de la vanne représentée figures 1 à 5, dans le cas d'une disposition classique ;

La figure 9 est une perspective schématique d'un papillon présentant une excentration nulle ;

Les figures 10 et 11 sont des représentations schématiques permettant de mettre en relief les contraintes exercées sur le papillon à l'ouverture de la vanne, pour des formes de la portée du papillon telles que les contraintes passent par l'axe du papillon (figure 10) et ne passent pas par l'axe du papillon mais présentent un bras de levier minimum (figure 11) ;

La figure 12 est une représentation schématique, dans l'espace, d'un papillon présentant une portée conformée selon l'invention, avec ses différents paramètres ;

La figure 13 est une représentation d'un papillon conforme à celui de la figure 12 dans laquelle l'allure des normales $\overline{N}$ à la portée du papillon a été précisée ;

Les figures 14, 15 et 16 sont des représentations analogues à celles de la figure 13, dans le cas où la forme de la portée du papillon est obtenue par deux sphères (figure 14) par deux cônes (figure 15) et par deux rayons concaves (figure 16) ;

La figure 17 est une représentation schématique d'un papillon présentant une portée de forme bitorique.

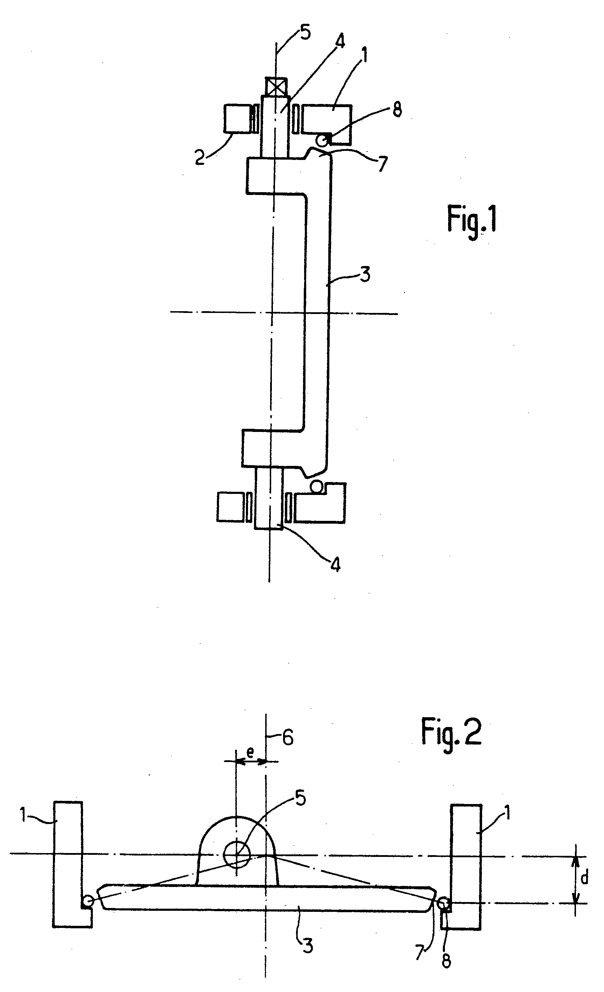

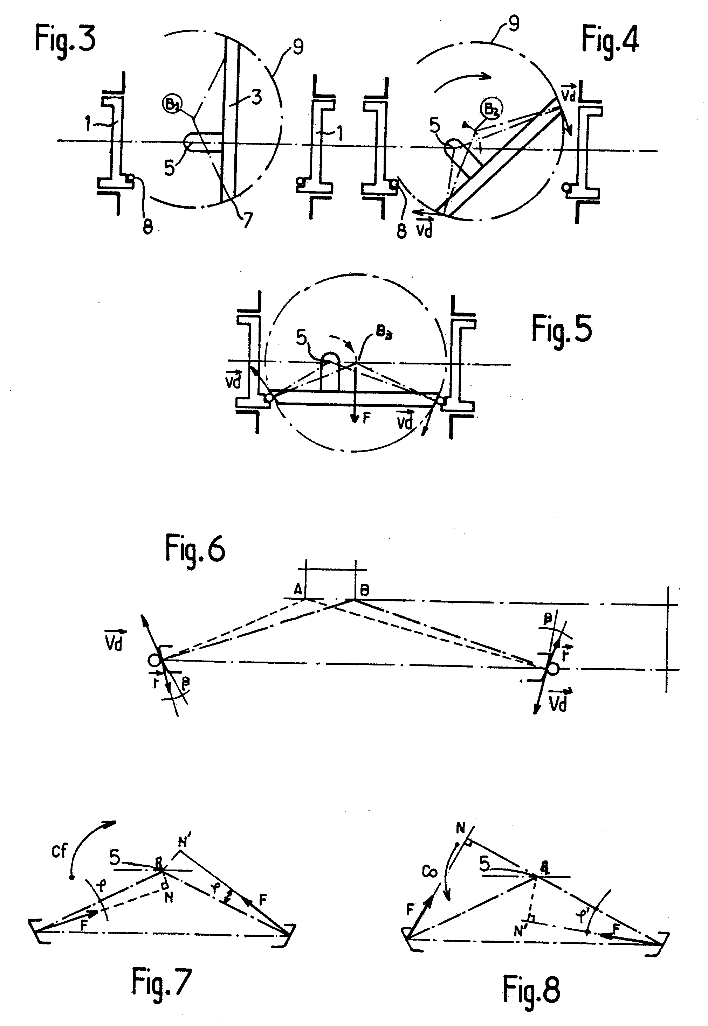

La vanne-papillon représentée figures 1 et 2 comprend, de façon classique, un corps 1 à alésage cyclindrique 2 à l'intérieur duquel est monté pivotant un papillon 3 au moyen d'arbres coaxiaux 4 décalés et décentrés par rapport au papillon 3. D'une manière plus précise le décalage des arbres est égal à la distance *d* entre l'axe commun 5 de ces arbres et le papillon, tandis que l'excentration des arbres est égale à la distance *e* de l'axe commun 5 des arbres 4 à l'axe de symétrie 6 de la portée 7 du papillon et du siège 8. Comme on peut le voir sur les figures 3, 4 et 5, la portée 7 (tranche) du papillon présente une forme sphérique inscrite dans une sphère 9 généralement appelée « sphérique de la portée 7 du papillon ».

Dans la position ouverte (figure 3) de la vanne, le papillon 3 est disposé parallèlement à l'axe d'écoulement de la vanne (axe de l'alésage), le centre $B_1$ du sphérique 9 étant situé au-dessus de l'axe de rotation 5 du papillon 3. A partir de cette position la fermeture de la vanne s'obtient en faisant pivoter le papillon 3 autour de l'axe 5, mouvement au cours duquel le centre du sphérique 9 décrit une trajectoire circulaire passant par une position intermédiaire représentée par le point $B_2$ (figure 4) jusqu'à la position de fermeture représentée par le point $B_3$ (figure 5). Au

terme de ce mouvement, la portée 7 du papillon 3 dont on a indiqué le vecteur déplacement $\overrightarrow{Vd}$ vient comprimer le joint 8 formant le siège de la vanne.

Comme on peut le voir figure 6 qui représente schématiquement, à plus grande échelle, le papillon 3 en position de fermeture, l'angle de compression « β » formé par le vecteur déplacement de la portée du papillon $\overrightarrow{Vd}$ et la tangente $\overrightarrow{t}$ à la portée sphérique 7, est très petit, ce qui engendre un frottement intense entre le siège 8 et le papillon 3.

Les figures 7 et 8 montrent que les contraintes résultantes F exercées sur le papillon 3 ont un bras de levier NA, N'A par rapport à l'axe de rotation 5, important, ce qui a pour effet d'engendrer des couples Co et Cf importants tant à l'ouverture qu'à la fermeture de la vanne.

Comme précédemment mentionné, l'invention a pour but de supprimer ces inconvénients. La solution qu'elle propose à cet effet est aussi bien valable pour les vannes à papillon décalé et excentré que pour les vannes à excentration réduite, voir même nulle.

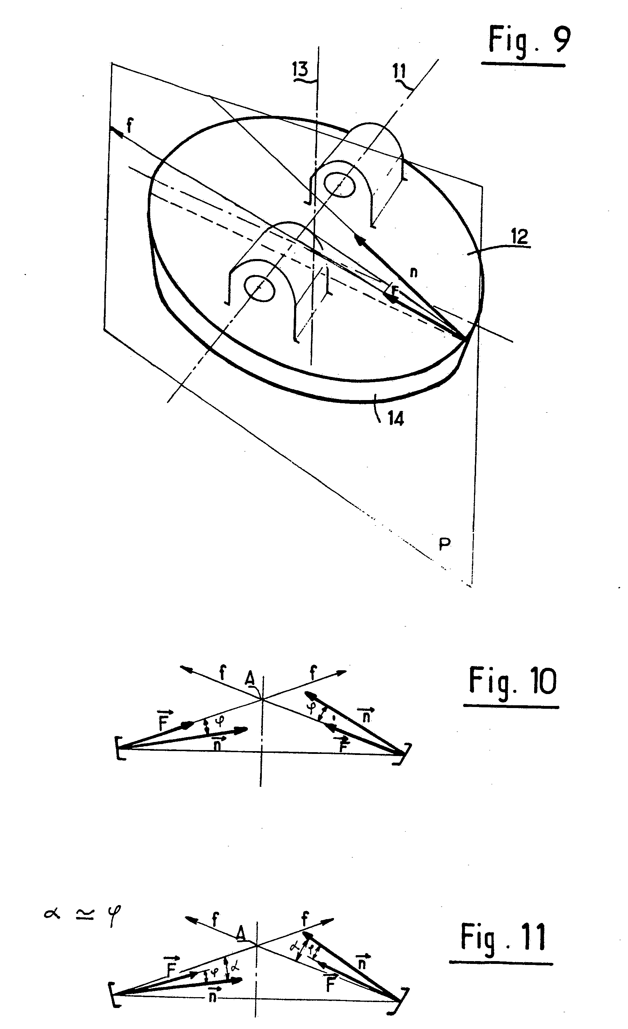

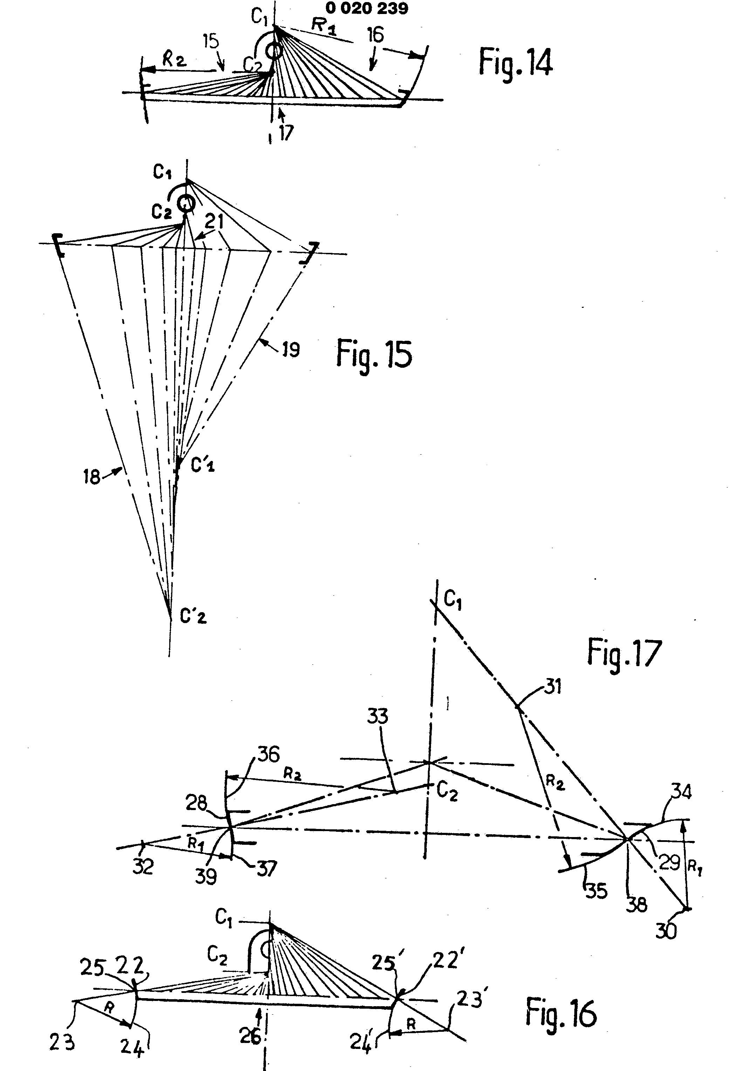

Ainsi, dans les modes de réalisation représentés figures 9 et 17, l'axe de rotation 11 du papillon 12 et l'axe de symétrie 13 du papillon 12 et du joint (non représenté) sont sécants (excentration nulle).

On rappelle que le problème que vise à résoudre l'invention est de définir une forme de la portée 14 du papillon 12 telle que les contraintes effectuées sur ce dernier, lors de l'ouverture aient, par rapport à l'axe de rotation 11 de l'arbre d'entraînement, une valeur de bras de levier voisine de zéro.

Lors de l'ouverture, les directions des contraintes F sont inclinées par rapport à la normale $\overrightarrow{n}$ à la section de la portée du papillon dans le plan perpendiculaire à l'axe de rotation 11 des arbres (figure 9) d'un angle égal à l'angle de frottement du couple siège-portée du papillon 12.

Les directions des contraintes F ainsi définies peuvent passer par l'axe de rotation 11, ou bien être dirigées de sorte que les contraintes créent un couple résistant d'ouverture minimum, soit un couple moteur à l'ouverture.

Ces deux cas se trouvent illustrés par les figures 10 et 11 dans lesquelles on a représenté dans le plan P les contraintes F appliquées sur le papillon 12, lors de l'ouverture, dans le cas où elles passent par l'axe de rotation 11 et dans le cas où elles ne passent pas par l'axe de rotation 11 mais où elles présentent un bras de levier minimum. Sur ces figures, on a désigné par :

$\overrightarrow{n}$ : la normale à la section de la portée dans le plan P,

$\overrightarrow{F}$ : la configuration de la contrainte sur le papillon 12 lors du mouvement d'ouverture,

$\overrightarrow{N}$ : la normale à la portée dans le plan passant par l'axe du siège 13,

f : la droite joignant le point de contact du siège à l'axe de rotation,

φ : l'angle de frottement du couple siège-portée du papillon 12,

α : l'angle de décalage sphérique.

La direction de $\overrightarrow{n}$ peut ainsi être définie pour chaque point de la surface de la portée 14 dans le plan P.

La perpendiculaire t à la normale $\overrightarrow{N}$ et la tangente dans le plan 7 au cercle de la portée du papillon définissent le plan tangent T à la surface du siège du papillon, la forme de la portée 14 du papillon 12 étant quant à elle définie par le cercle de portée du papillon 12 et par les plans tangents T à la forme en ces points.

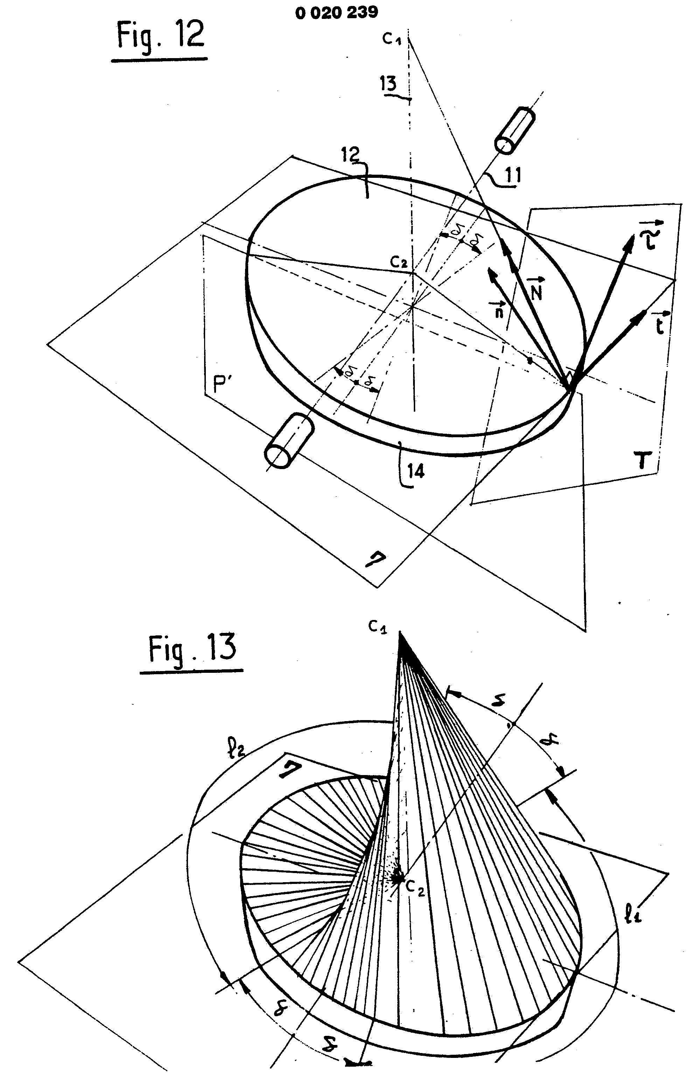

Les études qui ont été effectuées dans le cadre de la présente invention ont montré que les formes — permettant d'assurer une répartition des contraintes sur le papillon 12, telles que leur valeur absolue et leur bras de levier par rapport à l'axe de rotation 11, soient minimum — sont telles que les normales $\overrightarrow{N}$ à la forme de la portée 14 du papillon 12 sur chacune des portions circulaires $I_1$ et $I_2$ situées de part et d'autre du plan de symétrie du papillon 12 passant par l'axe de rotation 11, coupent l'axe de symétrie 13 du joint en deux points distincts $C_1$ et $C_2$ (figures 12 et 13).

Dans les zones situées au niveau des passages d'axes, définies par les secteurs δ, l'intersection des normales $\overrightarrow{N}$ à la forme de la portée 14 du papillon avec le segment $C_1$, $C_2$ évolue de façon continue entre $C_1$ et $C_2$.

Les formes des portées 14 du papillon 12 répondant à ces conditions peuvent être très variées, et consister par exemple :

— ou bien, comme représenté figure 14, en la réunion de deux portions sphériques 15 et 16 centrées aux points distincts $C_1$, $C_2$ raccordées entre elles par une succession continue de portions élémentaires de sphère 17 assurant un passage progressif de l'une sur l'autre ;

— ou bien, comme représenté figure 15, en la réunion de deux portions coniques 18 et 19 centrées sur l'axe de symétrie du siège et dont les normales, passant par les points de contact avec le siège, sont concourantes aux points $C_1'$ et $C_2'$ et raccordées entre elles par une succession continue de portions coniques élémentaires 21 dont l'angle au sommet varie progressivement ;

— ou bien, comme représenté figure 16, consister en la réunion de deux surfaces toriques 22, 22' dont les centres 23, 23' du cercle générateur 24, 24', les points de contact 25, 25', siège-papillon, et les points $C_1$ ou $C_2$ sont alignés, le raccordement entre les deux tores s'effectuant alors par une succession continue de portions toriques élémentaires 26.

Dans l'exemple de la figure 16, on a représenté une forme torique concave, étant bien entendu qu'il serait également possible de prévoir une forme torique convexe, ou encore, comme représenté figure 17, consistant en la réunion de deux surfaces bitoriques 28, 29 dont la forme est constituée de deux portions de tore dont les centres 30, 31, 32 et 33 des cercles directeurs 34, 35 et 36, 37, le point de contact siège-papillon 38, 39 et les points $C_1$ et $C_2$ sont alignés. D'une façon analogue à la précédente le raccordement entre les deux surfaces multitoriques s'effectue par une succession continue de formes multitoriques élémentaires.

**Revendications**

1. Vanne-papillon comprenant un corps dont l'alésage central est muni d'un siège perpendiculaire à l'axe (13) de l'alésage, un joint d'étanchéité (8) monté sur ledit siège et un papillon (12) monté pivotant dans ledit corps au moyen d'un axe d'entraînement en rotation (11) décalé par rapport audit papillon, ce papillon (12) présentant une tranche (14) venant comprimer ledit joint (8) en position fermée de la vanne, au niveau d'une portée de contact de forme sensiblement circulaire, la tranche (14) du papillon (12) étant formée par la réunion de deux surfaces à profil différent mais d'une même famille, situées de part et d'autre du plan de symétrie du papillon qui est perpendiculaire au plan dudit papillon (12) et est parallèle à ou passe par son axe d'entraînement en rotation (11), le passage de l'une des surfaces à l'autre s'effectuant progressivement, de façon continue, dans deux zones de raccordement formant un angle $\delta$, de part et d'autre dudit plan de symétrie, caractérisé en ce que, en position fermée de la vanne,

— les normales à la portée de contact de l'une des deux surfaces de la tranche (14) du papillon avec le joint d'étanchéité (8) convergent en un point $C_1$ de l'axe de symétrie (13) du joint (8) situé d'un côté de l'axe d'entraînement en rotation (11) du papillon (12).

— les normales à la portée de contact de l'autre surface de la tranche (14) du papillon, avec le joint d'étanchéité (8) convergent en un point différent $C_2$ de l'axe de symétrie (13) du joint (8), située de l'autre côté de l'axe d'entraînement en rotation (11) du papillon (12), et

— les normales à la portée de contact, dans les zones de raccordement ($\delta$), coupent l'axe de symétrie (13) du joint entre les deux points $C_1$ et $C_2$, le passage d'un point d'intersection au suivant s'effectuant progressivement et de façon continue.

2. Vanne-papillon selon la revendication 1, caractérisée en ce que l'angle $\delta$ susdit peut varier de 0 à 90°.

3. Vanne-papillon selon l'une des revendications précédentes, caractérisée en ce que la forme de la tranche (14) du papillon (12) consiste en la réunion de deux formes sphériques centrées aux deux susdits points $C_1$ et $C_2$, et raccordées entre elles par une succession continue de portions sphériques élémentaires de manière à assurer un passage progressif de l'une des formes sphériques à l'autre.

4. Vanne-papillon selon l'une des revendications 1 et 2, caractérisée en ce que la forme de la tranche (14) du papillon (12) consiste en la réunion de deux formes coniques centrées sur l'axe de symétrie du siège et dont les normales passant par les points de contact du joint, sont concourantes aux susdits deux points $C_1$ et $C_2$ et raccordées entre elles par une succession continue de portions coniques élémentaires dont l'angle au sommet varie progressivement.

5. Vanne-papillon selon l'une des revendications 1 et 2, caractérisée en ce que la forme de la tranche (14) du papillon (12) consiste en la réunion de deux surfaces toriques dont le centre du cercle générateur, les points de contact siège-papillon et les susdits points $C_1$ et $C_2$ sont alignés, le raccordement entre les deux surfaces toriques se faisant par une succession continue de formes toriques élémentaires.

6. Vanne-papillon selon la revendication 4, caractérisée en ce que les susdites surfaces toriques sont concaves ou convexes.

7. Vanne-papillon selon l'une des revendications 1 et 2, caractérisée en ce que la forme de la tranche (14) du papillon (12) consiste en la réunion de deux surfaces multitoriques, cette forme étant constituée par au moins deux portions de tore, dont les centres des cercles directeurs, les points de contact siège-papillon et les susdits points $C_1$ et $C_2$ sont alignés, le raccordement entre les deux surfaces multitoriques s'effectuant par une succession continue de formes multiroriques élémentaires.

**Claims**

1. A butterfly valve comprising a body whose central bore is provided with a seat perpendicular to the axis (13) of the bore, a seal (8) mounted on said seat and a butterfly (12) pivotably mounted in said body by means of a rotational drive shaft (11) offset with respect to said butterfly, this butterfly (12) having an edge (14) compressing said seal (8) in the closed position of the valve, at the level of a contact surface substantially circular in shape, the edge (14) of the butterfly (12) being formed by the joining together of two surfaces with different profiles but of the same family, situated on each side of the plane of symmetry of the butterfly which is perpendicular to the plane of said butterfly (12) and is parallel to or passes through its rotational drive shaft (11), passing over form one of the surfaces to the other taking place progressively and continuously in two connection zones forming an angle $\delta$, on each side of said plane of symmetry, characterized in that, in the closed position of the valve,

— the perpendiculars to the contact portion of one of the two surfaces of the edge (14) of the butterfly with the seal (8) converge at a point $C_1$ on the axis of symmetry (13) of the seal (8) situated on one side of the rotational drive shaft (11) of the butterfly (12),

— the perpendiculars to the contact portion of the other surface of the edge (14) of the butterfly with the seal (8) converge at a different point $C_2$ on the axis of symmetry (13) of the seal (8), situated on the other side of the rotational drive shaft (11) of the butterfly (12), and

— the perpendiculars to the contact portion, in

the connection zones (δ) intersect the axis of symmetry (13) of the seal between the two points $C_1$ and $C_2$, passing over from one intersection point to the next taking place progressively and continuously.

2. The butterfly valve according to claim 1, characterized in that said angle δ may vary from 0 to 90°.

3. The butterfly valve according to one of the preceding claims, characterized in that the shape of the edge (14) of the butterfly (12) consists in joining together of two spherical shapes centered at said two points $C_1$ and $C_2$ and connected together by a continuous section of elementary spherical portions so as to ensure progressive passage from one of the spherical shapes to the other.

4. The butterfly valve according to one of claims 1 and 2, characterized in that the shape of the edge (14) of the butterfly (12) consists in the joining together of two conical shapes centered on the axis of symmetry of the seat and whose perpendiculars passing through the contact points of the seal are concurrent at said two points $C_1$ and $C_2$ and connected together by a continuous succession of elementary conical portions whose angle at the apex varies progressively.

5. The butterfly valve according to one of claims 1 and 2, characterized in that the shape of the edge (14) of the butterfly (12) consists in the joining together of two toric surfaces in which the center of the generatrix circle, the seat-butterfly contact points and said points $C_1$ and $C_2$ are aligned, connection between the two toric surfaces being provided by a continuous succession of elementary toric shapes.

6. The butterfly valve according to claim 4, characterized in that said toric surfaces are concave or convex.

7. The butterfly valve according to one of claims 1 and 2, characterized in that the shape of the edge (14) of the butterfly (12) consists in the joining together of two multitoric surfaces, this shape being formed by at least two torus portions in which the centers of the directrix circles, the seat-butterfly contact points and said points $C_1$ and $C_2$ are aligned, connection between the two multitoric surfaces being provided by means of a continuous succession of elementary multitoric shapes.

**Ansprüche**

1. Drosselventil mit einem Körper, dessen Mittelbohrung mit einem senkrecht zur Achse (13) der Bohrung liegenden Sitz versehen ist, einer auf dem Sitz angeordneten Dichtung (8) und einer mittels einer gegenüber der Stellklappe (12) versetzten Drehbewegung antreibenden Achse (11) im Körper schwenkbar angeordneten Stellklappe (12), die eine Scheibe (14) darstellt, die die Dichtung (8) in geschlossener Stellung des Ventils zusammendrückt, wobei auf der Ebene einer allgemein kreisförmigen Kontaktfläche die Scheibe (14) der Stellklappe (12) gebildet wird durch die Vereinigung zweier Flächen, die unterschiedliche Profile haben, jedoch derselben Klasse angehören und beiderseits der Symmetrieebene der Stellklappe angeordnet sind, die senkrecht zur Ebene der Stellklappe (12) liegt sowie dabei parallel zur oder durch die drehende Antriebsachse (11) verläuft, und wobei sich der Übergang der einen Fläche zur anderen schrittweise und kontinuierlich in zwei einen Winkel δ bildenden Verbindungs- oder Anschlußzonen beiderseits der Symmetrieebene vollzieht, dadurch gekennzeichnet, daß in geschlossener Stellung des Ventils

— die Normalen zur Kontakfläche einer der beiden Flächen der Scheibe (14) der Stellklappe mit der Dichtung (8) in einem Punkt $C_1$ der Symmetrieachse (13) der auf einer Seite der drehenden Antriebsachse (11) der Stellklappe (12) liegenden Dichtung (8) konvergieren ;

— die Normalen zur Kontakfläche der anderen Fläche der Scheibe (14) der Stellklappe mit der Dichtung (8) in einem von der Symmetrieachse (13) der auf der anderen Seite der drehenden Antriebsachse (11) der Stellklappe (12) liegenden Dichtung (8) unterschiedlichen Punkt $C_2$ konvergieren und

— die Normalen zur Kontakfläche in den Anschluß- oder Verbindungszonen (δ) die Symmetrieachse (13) der Dichtung zwischen den beiden Punkten $C_1$ und $C_2$ schneiden, wobei sich der Übergang von einem Schnittpunkt zum nächsten schrittweise und kontinuierlich vollzieht.

2. Drosselventil nach Anspruch 1, dadurch gekennzeichnet, daß der Winkel δ von 0 bis 90° variieren kann.

3. Drosselventil nach einem der vorhergehenden Ansprüche 1 und 2, dadurch gekennzeichnet, daß die Form der Scheibe (14) der Stellklappe (12) gebildet ist durch die Vereinigung von zwei auf die beiden Punkte $C_1$ und $C_2$ zentrierten sphärischen Formen, die durch eine kontinuierliche Folge von elementaren sphärischen Abschnitten untereinander derart verbunden sind, daß ein schrittweiser Übergang von einer der sphärischen Formen auf eine andere gewährleistet ist.

4. Drosselventil nach einem der Ansprüche 1 und 2, dadurch gekennzeichnet, daß die Form der Scheibe (14) der Stellklappe (12) gebildet ist durch die Vereinigung von zwei konischen Formen, die auf die Symmetrieachse des Sitzes zentriert sind und deren durch die Kontaktpunkte der Dichtung laufenden Normalen durch dieselben beiden Punkte $C_1$ und $C_2$ gehen sowie durch eine kontinuierliche Folge von elementaren konischen Abschnitten untereinander verbunden sind, deren Winkel an der Spitze schrittweise variiert.

5. Drosselventil nach einem der Ansprüche 1 und 2, dadurch gekennzeichnet, daß die Form der Scheibe (14) der Stellklappe (12) gebildet ist durch die Vereinigung von zwei torischen Flächen, deren Mittelpunkt des Erzeugungskreises, die Kontaktpunkte Sitz-Stellklappe und die Punkte $C_1$ und $C_2$ ausgerichtet sind, wobei sich die Verbindungsherstellung zwischen den beiden torischen Flächen durch eine kontinuierliche Folge elementarer torischer Formen vollzieht.

6. Drosselventil nach Anspruch 4, dadurch gekennzeichnet, daß die torischen Flächen konkav oder konvex ausgebildet sind.

7. Drosselventil nach Anspruch 1 und 2, dadurch gekennzeichnet, daß die Form der Scheibe (14) der Stellklappe (12) gebildet ist durch die Vereinigung von zwei mehrtorischen Flächen, wobei diese Form aus zumindest zwei Torusabschnitten gebildet ist, deren Mittelpunkte der Wendekreise, die Kontaktpunkte Sitz-Stellklappe und die Punkte $C_1$ und $C_2$ ausgerichtet sind, wobei sich die Verbindungsherstellung zwischen den beiden mehrtorischen Flächen durch eine kontinuierliche Folge von elementaren mehrtorischen Formen vollzieht.

Fig.1

Fig.2

Fig.3

Fig.4

Fig.5

Fig.6

Fig.7

Fig.8

Fig. 9

13  11

f

12

n
F

14

P

Fig. 10

f  A  f
$\vec{F}$  $\varphi$  $\vec{n}$
$\vec{n}$  $\vec{F}$

$\alpha \approx \varphi$

Fig. 11

f  A  f
$\vec{F}$  $\alpha$  $\alpha$ $\varphi$  $\vec{n}$
$\varphi$  $\vec{F}$
$\vec{n}$  $\vec{n}$

Fig. 12

0 020 239

Fig. 13

0 020 239

Fig. 14

Fig. 15

Fig. 17

Fig. 16